# EUROPEAN PATENT APPLICATION

(11) **EP 0 571 339 A2**
(43) Date of publication of application: **24.11.1993**
(21) Application number: 93830206.4
(22) Date of filing: 17.05.1993
(51) Int. Cl.: B25B 5/06, B23Q 3/00

(54) **Gripping device particularly suited for gripping and handling stacks of panels in panel sectioning machines**

(30) Priority: 19.05.1992 IT BS920055
(71) Applicant: GABBIANI MACCHINE S.p.A., I-25028 Verolanuova (Brescia) (IT)
(72) Inventor: Mancini, Ermanno, I-25100 Brescia (IT)
(74) Representative: Manzoni, Alessandro

(57) **Abstract**

A gripping device particularly suited for gripping and handling stacks of panels in panel sectioning machines which comprises two parallel arms (12,13) provided with gripping members (12a,13a) and susceptible of displacements in the direction of the height of the stack of panels to be gripped for the opening/closing of the gripping members, and a pusher susceptible of horizontal sliding displacements towards and away from the head of the stack of panels to be gripped and contemporarily of vertical displacements in the direction of the height of the stack of panels.

## Description

The present invention concerns the field of machines for sectioning panels piled on a feed plane and, more particularly, it relates to a gripping device which, in a plurality with other identical devices aligned, provides the gripping and handling of stacks of panels in said machines.

At present, different types of gripping devices are known for use in said machines and for the aforementioned purpose. However, the known gripping devices, besides being rather complex and cumbersome, are not free from some disadvantageous characteristics. They are generally provided with gripping jaws located at the ends of controlled arms, at least one of which is pivoted and susceptible of oscillating movements so as to move the jaws close to/away from the stack of panels to be gripped.
However, such movement of the arms, and therefore of the jaws, does not prevent any rubbing movements against the material during the opening/closing of the jaws, which may damage it.

The known gripping devices may also be provided with an alignment unit or pusher located in a position operating with open jaws, which is designed to rest against one end of the panels stacked, in order to align them before gripping. Nevertheless, the said alignment unit moves away, generally by rotation, and leaves the stack of panels before the grip exerted by the jaws.

All this causes the panels to be disarranged and/or to change their alignment before being gripped. It is an object of the present invention to obviate the disadvantageous characteristics of the known gripping devices with the aforementioned function and to provide a gripping device having a new, original structure and a new modality of operation and interaction of its gripping members or jaws and with an alignment unit exerting particular action between and with respect to the gripping members.

For the said purpose, the present invention seeks to provide a gripping device as claimed in claim 1. and particularly suited for gripping and handling stacks of panels on working surfaces of sectioning machines.

In substance, said gripping device comprises gripping members or jaws provided with vertical opening/closing movements, more precisely in the direction of the height of the stack of panels to be gripped. Thus, it is possible to prevent any oscillating/rotating displacements, which may cause any relative movements in the direction of the length of the panels, and consequently any damage to the material being handled.

Besides, one of the gripping members, the lower or opposite gripping member, may be of floating type, but always in vertical direction and with vertical motion in order to ensure release of the material and avoid any friction against it.

Moreover, the alignment unit, or pusher, is of sliding type and may be slid from a rest position, retracted between the gripping members, to an operative position, protruding from the front part of the gripping members. Advantageously, the displacement of the alignment unit from the one position to the other consists in combined horizontal and vertical movements, which makes for easier and more accurate arrangement of panels in piles between the open gripping members, thus avoiding any undesired friction of the gripping means against the material.
Besides, because of the aforementioned combined movements of the pushing element, the material settles inside the opening defined by the gripping members with a certain preloading force, which prevents piles from being disarranged. In fact, the vertical component of the movement of the pushing element is specially conceived for allowing the collection of a pile of material from the material to be sawn stacked on a feed plane without any interferences and/or laborious and complex movements, and for preventing any interference in longitudinal direction between the lower gripping member and the material. The sliding pusher may also be used for aligning stacks of disarranged panels.

Further details of the invention will become apparent from the continuation of the description, illustrated only by way of example with reference to the accompanying drawings, in which:
Figure 1 shows a vertical sectional view of the gripping device, with open gripping members and with pushing element working for head alignment of a stack of panels;
Figure 2 shows a sectional view similar to the one illustrated in Figure 1, though with the pushing element retracted and the gripping members in gripping position on the pile of panels; and
Figures 3 and 4 outline a detail of the device in alignment and gripping positions respectively, corresponding to the attitudes illustrated in Figures 1 and 2.

The gripping device according to this invention comprises a body 10, which generally has a "L"-shaped configuration, through which the device is operatively fixed to a machine for sectioning piled panels 11. The body 10 is provided with a horizontal branch 10a and a vertical branch 10b. The horizontal branch 10a comprises an upper arm 12 with an end gripping member 12a and a lower arm 13 with an end gripping member 13a, extending on two levels and parallel to each other, said gripping members 12a and 13a protruding from the horizontal branch 10a of the body 10, towards the stack of panels 11.

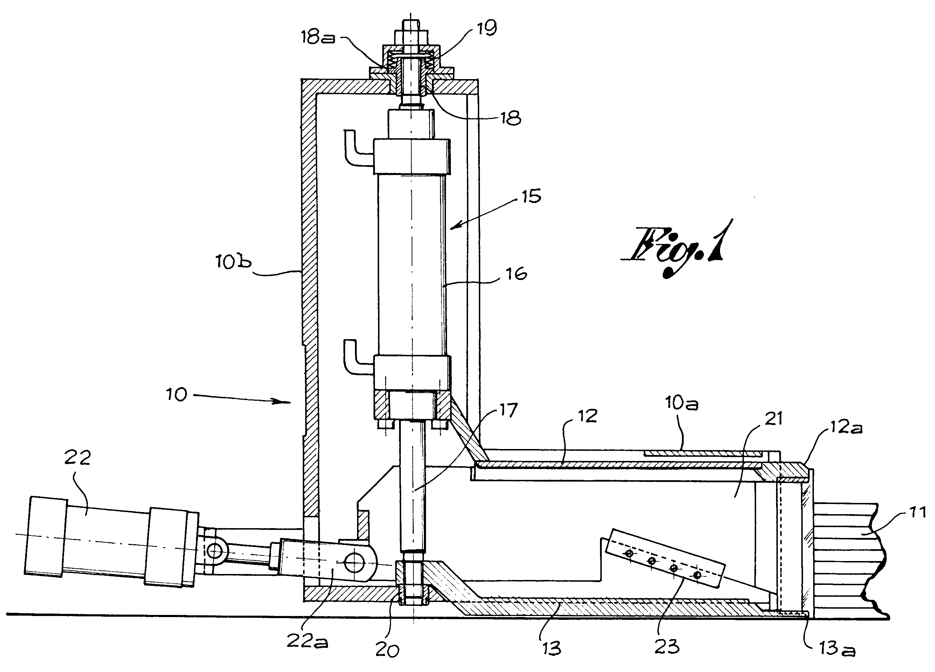

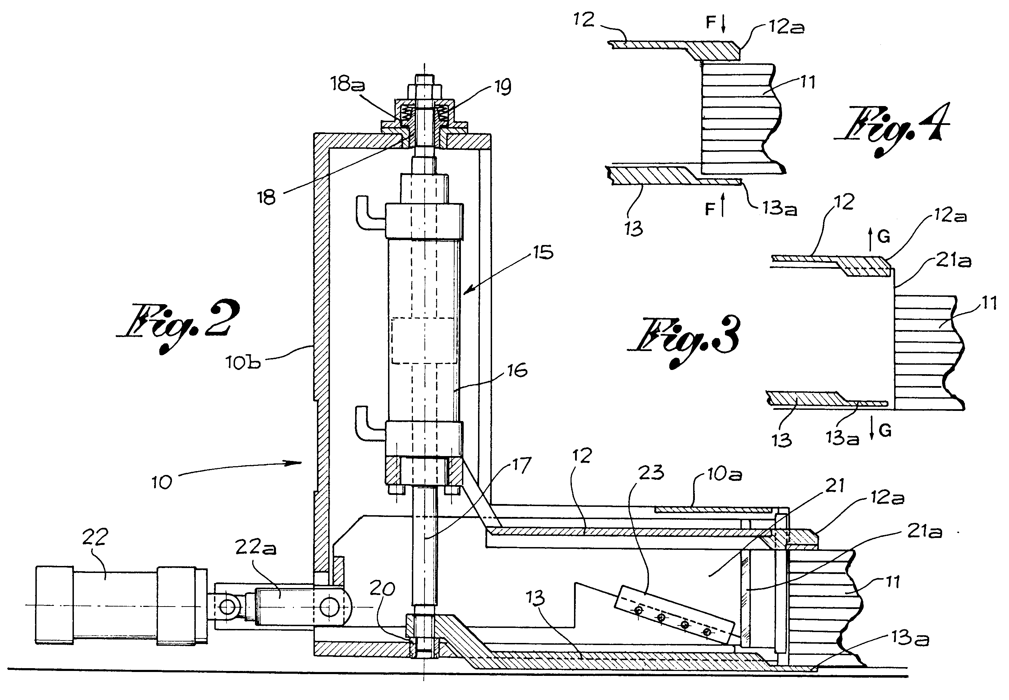

The vertical branch 10b of the body 10 comprises a rectilinear pneumatic actuator 15, arranged vertically and designed to control the opening/closing of the gripping members through the arms 12, 13. The arms 12, 13, and therefore the respective gripping members, move on a vertical plane or rather in opposite directions and in the direction of the height of the stack of panels 11 to be gripped, according to arrows F and G in Figures 3 and 4 respectively.

More precisely, said pneumatic actuator 15 includes a vertical axis double acting cylinder 16 and a stem 17 extending axially through the whole length of the cylinder.

The cylinder 16 is fixed to and removable with the upper arm 12 of the gripping member, whereas the stem 17 is fixed to and movable with the lower arm 13 in its lower part - i.e. below cylinder 16 - and anchored to the top of the body 10, 10b in its upper part - i.e. above the cylinder - through a bush 18 provided with a peripheral flange 18a designed to knock against the said body. The bush 18 is not fixed but floating and movable vertically with the stem 17, in opposition to the action exerted by a spring 19 which tends to displace it and to normally keep it downwards, with the flange 18a resting against the body.

Also the lower end of the stem 17 may be connected to a bush 20 guided axially in the lowest part of the body.
The horizontal branch 10a of the body 10 is also provided, proximate to the arms 12, 13, with a sliding pusher 21 having a free end 21a facing the gripping members 12a, 13a, that is to say the stack of panels 11. The opposite end - the back end - of the sliding pusher is connected to the stem of a horizontal, pneumatic control cylinder 22 via a pivoted joint 22a. The sliding pusher 21 is displaceable horizontally by means of the pneumatic cylinder 22, in forward motion so as to move and protrude its free end 21a beyond the open gripping members 12a, 13a and for the alignment of the panel heads 11 - see Figures 1 and 3 - and in backward motion, in retracted position inside the branch 10a of the body 10, between the arms 12, 13, while panels are gripped by the gripping members - see Figures 2 and 4.

Horizontal forward/backward motions of the sliding pusher 21 are associated with simultaneous vertical displacements due to the fact that the pusher 21 is bound to inclined guide means 23. Said guide means 23 are designed to cause lowering of the sliding pusher 21 when it is in its forward position, and raising thereof when it is retracted in rest position.

The structure of the gripping device is therefore particularly simple and free from any disadvantageous characteristics typical of the known devices of this type. The arms 12, 13 of the gripping device, and therefore the gripping members, are susceptible of parallel vertical displacements only, in the direction of the height of the stack of panels to be gripped. On the other hand, the sliding pusher 21 for aligning panels is provided with longitudinal and vertical combined movements, in order to make for easier arrangement and gripping of stacks of panels - as explained above.

## Claims

1. A gripping device particularly suited for gripping and handling stacks of panels in panel sectioning machines comprising a supporting body (10) and, on the said body, two arms (12,13) provided with end gripping members or jaws (12a,13a), a pusher (21) for the head alignment of panels (11) and means for controlling the said arms and pusher, characterized in that the said arms (12,13) with gripping members (12a,13a) are parallel and susceptible of opposite displacements in vertical direction, that is to say in the direction of the height of the stack of panels to be gripped for the opening/closing of the gripping members, and in that the said pusher (21) is located proximate to the said arms with gripping members and is susceptible of horizontal sliding movements towards and away from the head of the stack of panels to be gripped, and contemporarily of vertical displacements in the direction of the height of the said stack.

2. A gripping device as claimed in claim 1., wherein the said arms (12,13) are controlled by a rectilinear pneumatic actuator (15) in the form of a vertical pneumatic cylinder, and wherein the said sliding pusher (21) is controlled by a second horizontal rectilinear pneumatic actuator (22).

3. A gripping device as claimed in claims 1. and 2. wherein one of the arms (12) is fixed to and movable with the cylinder (16) of the first pneumatic actuator (15) and the other arm (13) is fixed to the stem (17) of the said actuator, the stem (17) being anchored with one end to the supporting body (10) via a floating bush (18), which is movable vertically with the stem in opposition to a spring (19) and is provided with a peripheral flange (18a) designed to knock against the said body in order to limit the displacement of the stem in one direction.

4. A device as claimed in claims 1. and 2., wherein the sliding pusher (21) is bound to the supporting body through inclined guide means (23) which cause vertical displacements of the pusher during the horizontal-longitudinal displacements thereof, the sliding pusher having its free end (21a) protruding from the supporting body beyond the griping members when in forward position, and being completely retracted inside the said body when in backward position.
